# EUROPEAN PATENT APPLICATION

(11) **EP 1 995 286 A1**
(43) Date of publication of application: **26.11.2008**
(21) Application number: 07738395.8
(22) Date of filing: 13.03.2007
(51) Int. Cl.: C09D 11/00, B65D 65/42

(54) **PRINTING INK COMPOSITION**

(30) Priority: 15.03.2006 JP 2006070717
(71) Applicant: DIC Corporation, Tokyo 174-8520 (JP)
(72) Inventor: MATSUDA, Jun, Suita-shi, Osaka 564-0011 (JP)
(74) Representative: Beckmann, Claus
(86) International application number: PCT/JP2007/054923
(87) International publication number: WO 2007/105715

(57) **Abstract**

Disclosed is a printing ink composition containing, as a cross-linking agent, a metal complex including a β-ketoester, for example, an acetoacetate ester such as methyl acetoacetate or ethyl acetoacetate, as a ligand; and a maleic acid resin.

## Description

### TECHNICAL FIELD

The present invention relates to a gravure printing ink composition that has excellent temporal stability and that can provide excellent film physical properties such as adherence properties to a plastic film, heat resistance or oil resistance without using, as a cross-linking agent, a metal complex wherein an acetylacetone such as titanium acetyl acetonate or zirconium acetyl acetonate is present as a ligand.

### BACKGROUND ART

Gravure printing inks applied to food packaging materials using plastic films are classified into two category: a reverse printing ink that is printed onto the backside of the film where lamination is requisite to the printing technique; and a surface printing ink that is printed onto the front side of the film. When the packaging material is viewed from the outside, a design pattern formed of the reverse printing ink is visually confirmed through the film. That is, the reverse printing ink is printed inside the packaging material.

The coating film of the reverse printing ink is present inside the packaging film, and another film is generally further laminated on the ink film. Consequently, the ink film does not come into contact directly with the surroundings. However, it is required for the coating film of the reverse printing ink to have excellent adherence properties to such a film printed or laminated thereon, an adhesive or the like.

On the other hand, the surface printing ink is printed onto the front side of the packaging material. Consequently, the ink film is exposed to the outside, and comes into contact with various substances. Accordingly, such a surface printing ink requires strong film physical properties in addition to adherence properties to the film.

With regard to such required film physical properties, adherence properties, lubricating properties, abrasion resistance, heat resistance, oil resistance, etc. can be mentioned. In recent years, a surface printing ink having improved heat resistance (i.e. resistance to heat-sealing during a bag making process) or oil resistance (i.e. resistance to oil contents contained in foods) has been particularly sought.

In order to retain such film physical properties, metal chelate compounds, in particular, metal chelate compounds using an acetylacetone such as titanium acetyl acetonate or zirconium acetyl acetonate as a ligand, are currently used as a cross-linking agent in terms of temporal stability of the ink.

However, acetylacetones used as ligands for such metal chelate compounds have been recently excluded from the list of food additives approved by the European Food Safety Authority because mutagenicity of the substance is suspected. Accordingly, the European Printing Ink Association counseled European ink manufacturers to develop inks and related products thereof including no titanium acetyl acetonate, which may produce acetylacetones, in order to prevent acetylacetones from contaminating foods.

Because of this situation, there is a demand from European and North American food manufacturers for food packaging materials that is printed with an ink containing no acetylacetone. Therefore, development of a gravure ink containing no acetylacetone is an urgent task for ink manufacturers.

Patent Documents 1 to 3 describe printing ink compositions using an organic titanate and containing no acetylacetone. However, the documents do not disclose a cross-linking agent using a β-ketoester as a ligand.

Patent Documents 4 and 5 disclose a printing ink composition containing a zirconium chelate compound wherein 30 to 200 parts by weight of an C1-C6 alcohol such as methanol, ethanol or isopropyl alcohol; 100 to 500 parts by weight of an aromatic hydrocarbon such as benzene, toluene or xylene; 50 to 150 parts by weight of β-diketone or β-ketoester such as acetylacetones, methyl acetoacetate or ethyl acetoacetate; and 0.1 to 10 parts by weight of water are mixed with respect to 100 parts by weight of zirconium tetrakis(acetylacetonate). However, acetylacetones are used in the documents, and the documents do not disclose use of a maleic acid resin in combination.

Patent Document 6 discloses in an explanation of a gas barrier film that β**-**ketoesters such as methyl acetoacetate may be contained. However, the document describes that the purpose is to improve storage stability of the gas barrier coating composition. Therefore, the purpose of use of such β-ketoesters is different from the present invention. Moreover, the document describes that acetylacetones can be used for the same purpose above. Therefore, in the document, there is no technical idea of omitting the use of acetylacetone therein. Furthermore, the document does not suggest that β-ketoesters be included in a printing layer. Therefore, with regard to the document, there is a concern in which adherence properties of the ink film are insufficient. Additionally, the document does not suggest the use of a maleic acid resin in combination.
Patent Document 1: Japanese Unexamined Patent Application, Publication No. H9-31385.
Patent Document 2: Japanese Unexamined Patent Application, Publication No. H10-67959.
Patent Document 3: Japanese Unexamined Patent Application, Publication No. 2004-331841.
Patent Document 4: Japanese Unexamined Patent Application, Publication No. H7-145337.
Patent Document 5: Japanese Unexamined Patent Application, Publication No. H8-104843.
Patent Document 6: Japanese Unexamined Patent Application, Publication No. 2003-237829.

### DISCLOSURE OF THE INVENTION

The problem to be solved by the present invention is to provide a gravure printing ink composition that has excellent temporal stability and that can provide excellent film physical properties such as adherence properties to a plastic film, heat resistance or oil resistance without using, as a cross-linking agent, a metal complex wherein an acetylacetone such as titanium acetyl acetonate or zirconium acetyl acetonate is present as a ligand.

The present inventors conducted intensive studies to solve the problem. As a result, the present inventors discovered that a printing ink composition containing, as a cross-linking agent, a metal complex including a β-ketoester as a ligand, and a maleic acid resin could solve the above-described problem. This resulted in the present invention.

Specifically, an aspect of the present invention is to provide a printing ink composition containing, as a cross-linking agent, a metal complex including a β-ketoester as a ligand, and a maleic acid resin.

In this printing ink, it is preferable that the β-ketoester be an acetoacetate ester.

Moreover, it is preferable that the acetoacetate ester be metyl acetoacetate or ethyl acetoacetate.

Furthermore, it is preferable that the metal which coordinates to the ligand be at least one selected from the group consisting of copper, silver, mercury, lithium, beryllium, zinc, cadmium, aluminum, cobalt, nickel, gold, palladium, platinum, calcium, strontium, barium, titanium, vanadium, chromium, manganese, iron, cadmium, scandium, yttrium, stannum, ruthenium, rhodium, osmium, iridium, zirconium, hafnium, molybdenum, tungsten, uranium, lanthanoid and actinoid.

Another aspect of the present invention is to provide a packaging material wherein the printing ink composition having the above-described features is used.

The gravure ink of the present invention achieves excellent effects having excellent temporal stability and excellent film physical properties such as adherence properties to a plastic film, heat resistance or oil resistance without using, as a cross-linking agent, a metal complex wherein an acetylacetone such as titanium acetyl acetonate or zirconium acetyl acetonate is present as a ligand.

### BEST MODE FOR CARRYING OUT THE INVENTION

The β-ketoester used in the present invention, which is a ligand in the crosslinking agent, is preferably an acetoacetate ester. Furthermore, the β-ketoester is more preferably methyl acetoacetate or ethyl acetoacetate.

Examples of the metal which coordinates to the ligand include: copper, silver, mercury, lithium, beryllium, zinc, cadmium, aluminum, cobalt, nickel, gold, palladium, platinum, calcium, strontium, barium, titanium, vanadium, chromium, manganese, iron, cadmium, scandium, yttrium, stannum, ruthenium, rhodium, osmium, iridium, zirconium, hafnium, molybdenum, tungsten, uranium, lanthanoid and actinoid. In particular, titanium, zirconium, aluminum and iron are more preferable, and titanium is most preferable.

In the present invention, a cross-linking agent of a metal complex including such a β-ketoester as a ligand is combined with a maleic acid resin. Accordingly, the present invention can provide a printing ink composition having excellent temporal stability where temporal thickening such as gelation is not occurred. With regard to the combined maleic acid resin, a maleic resin whose acid value is 20 to 500 and whose softening point is 100°C to 200°C is preferable. A maleic resin whose acid value is 200 or less and whose softening point is 135°C to 145°C is more preferable.

Examples of vehicle components in the ink include: a polyamide, nitrocellulose, polyurethane, vinyl chloride-vinyl acetate copolymer, styrene, acryl, cellulose acetate butyrate, cellulose acetate propionate, polyolefin, ethylene-vinyl acetate copolymer, vinyl chloride-vinyl isobutyl ether copolymer, rosin, polyvinyl butyral, polyvinyl alcohol and the other resins used generally in gravure printing inks. These may be used singularly or in combination.

With regard to a solvent used in forming an ink, aromatic hydrocarbons such as toluene, alicyclic hydrocarbons such as methylcyclohexane, esters such as ethyl acetate, ketones such as methyl ethyl ketone, alcohol-based solvents such as isopropyl alcohol or denatured alcohols or a mixed solvent thereof can be used. Additionally, as additives, a polyethylene wax may be added to improve abrasion resistance, or silicon dioxide may be added to prevent blocking, among others, if required.

With regard to a printing or coating method for the ink, a preferred method such as general gravure coating, silk-screen printing or flexography may be used. However, gravure coating is preferable.

The dry thickness of the printed ink film is preferably 0.3 µm to 5 µm, and more preferably 0.8 µm to 2 µm. If the dried film is excessively thick, a problem of blocking (phenomena where the surface of the ink film adheres to another ink film) frequently occurs.

### EXAMPLES

Hereinafter, the present invention will be described in detail with reference to Examples. In the present description, "part" and "%" are based on mass unless otherwise specified.

### 1. Preparation of a basic white ink.

(1) a pigment ("CR-67" produced by Ishihara Sangyo Kaisha, Ltd.) ··· 25.0 parts;
(2) a nitrocellulose resin ("L1/4" produced by Asahi Kasei Corporation) ··· 5.0 parts;
(3) a polyamide resin ("RHEOMIDE S2850" produced by Kao Corporation) ··· 15.0 parts;
(4) mixed solvents (toluene/isopropyl alcohol/ethyl acetate = 6/3/1) ··· 54.0 parts; and
(5) a mold-release wax ("AP-1" produced by Nippon Kasei Chemical Company Limited)··· 1.0 parts.

The above (1) to (4) were mixed, and the pigment was dispersed with a sand mill. Then, (5) was added to produce a basic white ink.

### 2. Preparation of a basic indigo ink.

(1) an indigo pigment ("CYANINE BLUE KRG" produced by Sanyo Color Works. Ltd.) ··· 10.0 parts;
(2) a nitrocellulose resin ("L1/4" produced by Asahi Kasei Corporation) ··· 5.0 parts;
(3) a polyamide resin ("RHEOMIDE S2850" produced by Kao Corporation) ··· 15.0 parts;
(4) mixed solvents (toluene/isopropyl alcohol/ethyl acetate = 6/3/1) ··· 69.0 parts; and
(5) a mold-release wax ("AP-1" produced by Nippon Kasei Chemical Company Limited) ··· 1.0 parts.

The above (1) to (4) were mixed, and the pigment was dispersed with a sand mill. Then, (5) was added to produce a basic indigo ink.

The above-produced basic inks 1 and 2 did not contain a cross-linking agent. These were referred to as group "A".

### 3. Preparation of white ink "A-1".

(1) the above basic white ink ··· 100.0 parts;
(2) a maleic acid resin ("MALKYD No. 31" produced by Arakawa Chemical Industries, Ltd.) ··· 2.5 parts;
(3) mixed solvents (toluene/isopropyl alcohol/ethyl acetate = 6/3/1) ··· 2.5 parts; and
(4) a cross-linking agent ("TMAA" produced by Nippon Soda Co., Ltd.) ··· 2.0 parts.

The above (1) to (3) were mixed. Then, (4) was added to produce a white ink "A-1" (Example A-1).

In addition, "TMAA" was a cross-linking agent wherein methyl acetoacetate coordinated to titanium.

### 4. Preparation of color ink "A-1"

(1) the above basic indigo ink ··· 100.0 parts;
(2) a maleic acid resin ("MALKYD No. 31" produced by Arakawa Chemical Industries, Ltd.) ··· 2.5 parts;
(3) mixed solvents (toluene/isopropyl alcohol/ethyl acetate = 6/3/1) ··· 2.5 parts; and
(4) a cross-linking agent ("TMAA" produced by Nippon Soda Co., Ltd.) ··· 2.0 parts.

The above (1) to (3) were mixed. Then, (4) was added to produce a color ink "A-1" (Example A-1).

The above inks "A-1" of 3 and 4 used "TMAA" as a cross-linking agent.

### 5. Preparation of white ink "B-1"

(1) the above basic white ink ··· 100.0 parts;
(2) a maleic acid resin ("MALKYD No. 31" produced by Arakawa Chemical Industries, Ltd.) ··· 2.5 parts;
(3) mixed solvents (toluene/isopropyl alcohol/ethyl acetate = 6/3/1) ··· 2.5 parts; and
(4) a cross-linking agent ("TEAA" produced by Nippon Soda Co., Ltd.) ··· 2.0 parts.

The above (1) to (3) were mixed. Then, (4) was added to produce a white ink "B-1" (Example B-1).

In addition, "TEAA" was a cross-linking agent wherein ethyl acetoacetate coordinated to titanium.

### 6. Preparation of color ink "B-1"

(1) the above basic indigo ink ··· 100.0 parts;
(2) a maleic acid resin ("MALKYD No. 31" produced by Arakawa Chemical Industries, Ltd.) ··· 2.5 parts;
(3) mixed solvents (toluene/isopropyl alcohol/ethyl acetate = 6/3/1) ··· 2.5 parts; and
(4) a cross-linking agent ("TEAA" produced by Nippon Soda Co., Ltd.) ··· 2.0 parts.

The above (1) to (3) were mixed. Then, (4) was added to produce a color ink "B-1" (Example B-1).

The above inks "B-1" of 5 and 6 used "TEAA" as a cross-linking agent.

The inks 3 to 6 were referred to as group "B".

### 7. Preparation of white ink "A-2"

(1) the above basic white ink ··· 100.0 parts; and
(2) a cross-linking agent ("TMAA" produced by Nippon Soda Co., Ltd.) ··· 2.0 parts.

The above (1) and (2) were mixed to produce a white ink "A-2" (Comparative Example A-2).

### 8. Preparation of color ink "A-2"

(1) the above basic indigo ink ··· 100.0 parts; and
(2) a cross-linking agent ("TMAA" produced by Nippon Soda Co., Ltd.) ··· 2.0 parts.

The above (1) and (2) were mixed to produce a color ink "A-2" (Comparative Example A-2).

### 9. Preparation of white ink "B-2"

(1) the above basic white ink ··· 100.0 parts; and
(2) a cross-linking agent ("TEAA" produced by Nippon Soda Co., Ltd.) ··· 2.0 parts.

The above (1) and (2) were mixed to produce a white ink "B-2" (Comparative Example B-2).

### 8. Preparation of color ink "B-2"

(1) the above basic indigo ink ··· 100.0 parts; and
(2) a cross-linking agent ("TEAA" produced by Nippon Soda Co., Ltd.) ··· 2.0 parts.

The above (1) and (2) were mixed to produce a color ink "B-2" (Comparative Example B-2).

The inks "A-2" and "B-2" of 7 to 10 used TMAA or TEAA as a cross-linking agent. However, a maleic acid resin was not included therein. These inks are referred to as group "C".

### 11. Preparation of standard white ink "S"

(1) the basic white ink··· 100.0 parts; and
(2) a cross-linking agent ("Orgatics TC-100" produced by Matsumoto Chemical Industry Co., Ltd.) ··· 2.0 parts.

The above (1) and (2) were mixed to produce a standard white ink "S".

### 12. Preparation of standard color ink "S"

(1) the basic color ink··· 100.0 parts; and
(2) a cross-linking agent ("Orgatics TC-100" produced by Matsumoto Chemical Industry Co.1, Ltd.) ··· 2.0 parts.

The above (1) and (2) were mixed to produce a standard color ink "S".

The above standard inks "S" (white and color) were conventional and general inks that used titanium acetyl acetonate as a cross-linking agent. These inks are referred to as group "D".

### <Evaluation 1.: confirmation of fluidity (temporal stability)>

The above-prepared non-diluted inks were charged to closed containers, and these were stored in a temperature-controlled bath at room temperature or at 50°C for seven days. Then, state of fluidity of each ink was evaluated. The results are shown in Table 1.

**Table 1**

| Group | Ink | Coloration | Fluidity (stored at room temperature) | | | Fluidity (stored at 50°C) | |
|---|---|---|---|---|---|---|---|
| | | | After 10 minutes | After one day | After seven days | After one day | After seven days |
| D | Standard ink "S" | White | Excellent | Excellent | Excellent | Excellent | Excellent |
| | | Indigo | Excellent | Excellent | Excellent | Excellent | Excellent |
| B | Example A-1 | White | Excellent | Excellent | Excellent | Excellent | Excellent |
| | | Indigo | Excellent | Excellent | Excellent | Excellent | Excellent |
| | Example B-1 | White | Excellent | Excellent | Excellent | Excellent | Excellent |
| | | Indigo | Excellent | Excellent | Excellent | Excellent | Excellent |
| C | Comparative Example A-2 | White | Inferior | - | - | - | - |
| | | Indigo | Inferior | - | - | - | - |
| | Comparative Example B-2 | White | Inferior | - | - | - | - |
| | | Indigo | Inferior | - | - | - | - |
| A | Basic ink | White | Excellent | Excellent | Excellent | Excellent | Excellent |
| | | Indigo | Excellent | Excellent | Excellent | Excellent | Excellent |

In Table 1, "excellent" means fluidity being excellent; "inferior" means occurrence of gelation or fluidity being deficient; and "-" refers to not evaluated.

Group "A" (basic inks) where a cross-linking agent was not used; Group "D" (standard inks "S") where titanium acetyl acetonate was used; and Group "B" (inks A-1 and B-1) where a maleic acid resin and a cross-linking agent containing no an acetylacetone were combined had excellent fluidity, namely excellent temporal stability.

However, group "C" (inks A-2 and B-2) that only used a cross-linking agent containing no acetylacetone indicated impairment in fluidity after ten minutes at room temperature. Consequently, it was revealed that the combination of a maleic acid resin dominantly contributed to temporal stability.

### <Evaluation 2.: confirmation of heat resistance and oil resistance>

The prepared inks were diluted by 40% with a preparation solvent (toluene/isopropyl alcohol/ethyl acetate = 6/3/1) (i.e. 40 parts by mass of the preparation solvent was added to 100 parts by mass of the ink). The diluted ink was printed onto the corona discharge-treated surface of a treated OPP film (produced by Futamura Chemical Co., Ltd.) using a Helio 175-line solid printing plate, and this was used as a sample for heat resistance and oil resistance test. However, inks of group "C" that exhibited inferior fluidity after ten minutes at room temperature were not evaluated. The evaluation results are shown in Table 2. In addition, "white-indigo overlapped" refers to evaluation with respect to a portion where the white ink and the indigo ink were printed on top of each other.

**Table 2.**

| Group | Ink | Coloration | Heat resistance | | | | Oil resistance | |
|---|---|---|---|---|---|---|---|---|
| | | | 100°C | 120°C | 140°C | 160 C | After seven hours | After twenty-four hours |
| D | Standard ink "S" | White | Excellent | Excellent | Excellent | Excellent | Excellent | Excellent |
| | | Indigo | Excellent | Excellent | Excellent | Excellent | Excellent | Excellent |
| | | white-indigo overlapped | Excellent | Excellent | Excellent | Excellent | Excellent | Excellent |
| B | Example A-1 | White | Excel lent | Excellent | Excellent | Excellent | Excellent | Excellent |
| | | Indigo | Excellent | Excellent | Excellent | Excellent | Excellent | Excellent |
| | | white-indigo overlapped | Excellent | Excellent | Excellent | Excellent | Excellent | Excellent |
| | Example B-1 | White | Excellent | Excellent | Excellent | Excellent | Excellent | Excellent |
| | | Indigo | Excellent | Excellent | Excellent | Excellent | Excellent | Excellent |
| | | white-indigo overlapped | Excellent | Excellent | Excellent | Excellent | Excellent | Excellent |
| C | Comparative Example A-2 | White | - | - | - | - | - | - |
| | | Indigo | - | - | - | - | - | - |
| | | white-indigo overlapped | - | - | - | - | - | - |
| | Comparative Example B-2 | White | - | - | - | - | - | - |
| | | Indigo | - | - | - | - | - | - |
| | | white-indigo overlapped | - | - | - | - | - | - |
| A | Basic ink | White | Excellent | Excellent to Fair | Fair | Inferior | Inferior | - |
| | | Indigo | Excellent | Excellent to Fair | Fair | Inferior | Inferior | - |
| | | white-indigo overlapped | Excellent | Excellent to Fair | Fair | Inferior | Inferior | - |

### Test conditions:

### A. Heat resistance test

A printing surface of the test sample was brought into contact with a glossy surface of an aluminum foil, and this was heat-sealed at 100°C to 160°C and at 1 kg/cm² for one second. Whether or not the ink adhered to the aluminum foil (i.e. the ink film adhered to the aluminum foil when the aluminum foil was removed from the heat-sealed test sample) was confirmed by visual inspection. The less ink adhered to the aluminum foil, the better the heat resistance.

### B. Oil resistance test

A commercially-available "salad oil" was dripped onto the printing surface of the test sample, and the portion was rubbed forward and backward with a cotton swab twenty times. While rubbing, whether the ink peeled or not was temporally evaluated by visual inspection.

In Table 2, "excellent" refers to excellent resistance; "fair" refers to a acceptable range of resistance; "inferior" refers to completely deficient in resistance; and "-" refers to not-evaluated.

As shown in Table 2, Group "A" (basic inks) where a cross-linking agent is not used had inferior heat resistance and oil resistance.

Groups "D" (standard ink S) where titanium acetyl acetonate was used; and group "B" (inks A-1 and B-2) where a maleic acid resin and a cross-linking agent containing no acetylacetone were combined had excellent heat resistance and oil resistance.

Based on the above-described results, it was revealed that the gravure printing ink of the present invention had the same stability and film physical properties as conventional inks wherein titanium acetyl acetonate was used.

### INDUSTRIAL APPLICABILITY

The printing ink composition of the present invention has excellent temporal stability and can achieve excellent film physical properties such as adherence properties to a plastic film, heat resistance or oil resistance even though a metal complex using an acetylacetone as a ligand is not used. Therefore, the printing ink composition is applicable to printing to food packaging materials, etc.

## Claims

1. A printing ink composition comprising:
as a cross-linking agent a metal complex including a β-ketoester as a ligand; and
a maleic acid resin.

2. The printing ink composition according to Claim 1, wherein the β-ketoester is an acetoacetate ester.

3. The printing ink composition according to Claim 2, wherein the acetoacetate ester is methyl acetoacetate or ethyl acetoacetate.

4. The printing ink composition according to Claim 1, wherein the metal which coordinates to the ligand is at least one selected from the group consisting of copper, silver, mercury, lithium, beryllium, zinc, cadmium, aluminum, cobalt, nickel, gold, palladium, platinum, calcium, strontium, barium, titanium, vanadium, chromium, manganese, iron, cadmium, scandium, yttrium, stannum, ruthenium, rhodium, osmium, iridium, zirconium, hafnium, molybdenum, tungsten, uranium, lanthanoid and actinoid.

5. A packaging material wherein the printing ink composition according to any one of Claims 1 to 4 is used.
